(19) **Europäisches Patentamt European Patent Office Office européen des brevets**

(11) **EP 3 388 310 B1**

(12) **EUROPEAN PATENT SPECIFICATION**

(45) Date of publication and mention of the grant of the patent:
**15.07.2020 Bulletin 2020/29**

(51) Int Cl.:
*B62D 6/00* (2006.01)  *H02P 21/00* (2016.01)
*B62D 101/00* (2006.01)  *B62D 119/00* (2006.01)
*B62D 137/00* (2006.01)

(21) Application number: **16872740.2**

(22) Date of filing: **04.11.2016**

(86) International application number:
**PCT/JP2016/082751**

(87) International publication number:
**WO 2017/098840 (15.06.2017 Gazette 2017/24)**

(54) **ELECTRIC POWER STEERING DEVICE CONTROL METHOD AND CONTROL DEVICE**

STEUERUNGSVERFAHREN UND STEUERUNGSVORRICHTUNG FÜR ELEKTRISCHE SERVOLENKVORRICHTUNG

PROCÉDÉ DE COMMANDE DE DISPOSITIF DE DIRECTION ASSISTÉE ÉLECTRIQUE ET DISPOSITIF DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2015 JP 2015239898**

(43) Date of publication of application:
**17.10.2018 Bulletin 2018/42**

(73) Proprietor: **NSK Ltd.**
**Tokyo 141-8560 (JP)**

(72) Inventors:
• **SAWADA Hideki**
  **Tokyo 141-8560 (JP)**
• **SUGAWARA Takayoshi**
  **Tokyo 141-8560 (JP)**
• **MINAKI Ryo**
  **Tokyo 141-8560 (JP)**

(74) Representative: **Luten, Martin Haaije et al**
**Arnold & Siedsma**
**Bezuidenhoutseweg 57**
**2594 AC The Hague (NL)**

(56) References cited:
**JP-A- 2001 359 282    JP-B2- 3 480 843**

**Description**

Technical Field

The present invention relates to a control method and a control unit of an electric power steering apparatus that drives and controls a motor on the basis of a current command value, and applies an assist torque to a steering mechanism of a vehicle by means of the motor, and in particular to a control method and a control unit of an electric power steering apparatus that enables a transformation from a two-phase current command value or voltage command value to a three-phase current command value or voltage command value performed in the case of driving and controlling the motor with a little calculation amount.

Background Art

An electric power steering apparatus (EPS) which assists and controls a steering system of a vehicle by means of a rotational torque of a motor, applies a driving force of the motor as a steering assist torque (an assist torque) to a steering shaft or a rack shaft by means of a transmission mechanism such as gears or a belt through a reduction mechanism. In order to accurately generate the steering assist torque, such a conventional electric power steering apparatus performs feedback control of a motor current. The feedback control adjusts a voltage supplied to the motor so that a difference between a steering assist command value (a current command value) and a motor current detection value becomes small, and the adjustment of the voltage supplied to the motor is generally performed by an adjustment of a duty ratio of pulse width modulation (PWM) control.

Patent document JP 2001 359282 A relates to a control method, that drives and controls a motor based on a current command value, comprising a transformation step of transforming a two-phase command value calculated from said current command value into a three-phrase command value, wherein the transformation step separates a region for a vector consisting of said two-phase command value into six sectors, and transforms said two-phase command value into said three-phase command value based on a calculation method that is predefined in each sector and is simplified.

Patent document JP 2001 359282 A also relates to a control unit, that drives and controls a motor based on a current command value, comprising a transformation section that transforms a two-phase command value calculated from said current command value into a three-phase command value, wherein said transformation section separates a region for a vector consisting of said two-phase command value into six sectors, and transforms said two-phase command value into said three-phase command value based on a calculation method that is predefined in each sector and is simplified.

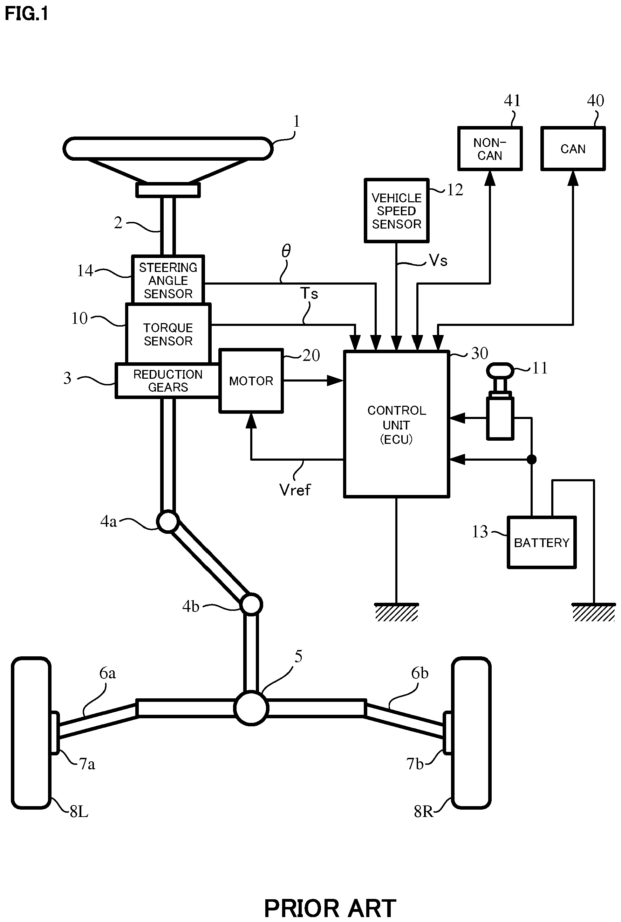

A general configuration of the electric power steering apparatus will be described with reference to FIG. 1. As shown in FIG. 1, a column shaft (a steering shaft or a handle shaft) 2 connected to a steering wheel 1 is connected to steered wheels 8L and 8R through reduction gears 3, universal joints 4a and 4b, a rack-and-pinion mechanism 5, and tie rods 6a and 6b, further via hub units 7a and 7b. In addition, the column shaft 2 is provided with a torque sensor 10 for detecting a steering torque of the steering wheel 1 and a steering angle sensor 14 for detecting a steering angle θ, and a motor 20 for assisting a steering force of the steering wheel 1 is connected to the column shaft 2 through the reduction gears 3. The electric power is supplied to a control unit (ECU) 30 for controlling the electric power steering apparatus from a battery 13, and an ignition key signal is inputted into the control unit 30 through an ignition key 11. The control unit 30 calculates a current command value of an assist (steering assist) command on the basis of a steering torque Ts detected by the torque sensor 10 and a vehicle speed Vs detected by a vehicle speed sensor 12, and controls a current supplied to the motor 20 for the EPS by means of a voltage control command value Vref obtained by performing compensation or the like to the current command value.

Moreover, the steering angle sensor 14 is not essential, it does not need to be provided, and it is possible to obtain the steering angle from a rotational position sensor such as a resolver connected to the motor 20.

A controller area network (CAN) 40 exchanging various information of a vehicle is connected to the control unit 30, and it is possible to receive the vehicle speed Vs from the CAN 40. Further, it is also possible to connect a non-CAN 41 exchanging a communication, analog/digital signals, a radio wave or the like except with the CAN 40 to the control unit 30.

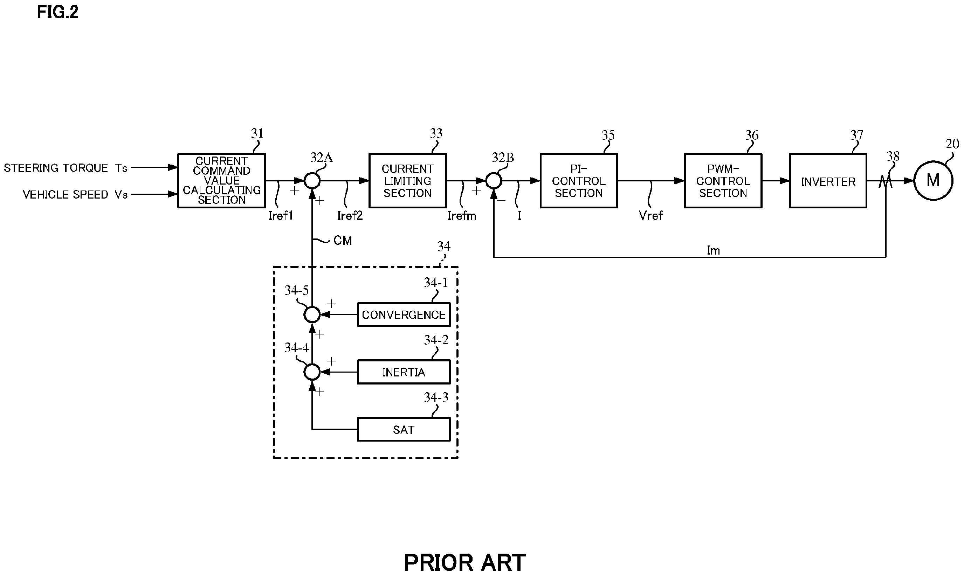

The control unit 30 mainly comprises an MCU (including a CPU, an MPU and so on), and general functions performed by programs within the MCU are shown in FIG. 2.

Functions and operations of the control unit 30 will be described with reference to FIG. 2. As shown in FIG. 2, the steering torque Ts detected by the torque sensor 10 and the vehicle speed Vs detected by the vehicle speed sensor 12 (or from the CAN 40) are inputted into a current command value calculating section 31 that calculates a current command value Irefl. The current command value calculating section 31 calculates the current command value Irefl that is a control target value of a current supplied to the motor 20 on the basis of the inputted steering torque Ts and the inputted vehicle speed Vs and by using an assist map or the like. The current command value Irefl is inputted into a current limiting section 33 through an adding section 32A. A current command value Irefm the maximum current of which is limited is inputted into a subtracting section 32B, and a deviation I (Irefm - Im) between the current command value Irefm and a motor current value Im being fed back is calculated. The deviation I is inputted into a proportional-integral (PI) control section 35 for improving a characteristic of the steering operation. The voltage control command value Vref whose characteristic is improved by the PI-control section 35 is inputted into a PWM-control section 36. Furthermore, the motor 20 is PWM-driven through an inverter 37 serving as a driving section. The current value Im of the motor 20 is detected by a motor current detector 38 and is fed back to the subtracting section 32B. The inverter 37 uses field effect transistors (FETs) as driving elements and is comprised of a bridge circuit of FETs.

A compensation signal CM from a compensation signal generating section 34 is added to the adding section 32A, and a characteristic compensation of the steering system is performed by the addition of the compensation signal CM so as to improve a convergence, an inertia characteristic and so on. The compensation signal generating section 34 adds a self-aligning torque (SAT) 34-3 and an inertia 34-2 at an adding section 34-4, further adds a convergence 34-1 at an adding section 34-5 to the result of addition performed at the adding section 34-4, and then outputs the result of addition performed at the adding section 34-5 as the compensation signal CM.

In such an electric power steering apparatus, a brushless motor which has superior durability and maintainability and has little noise, has been generally used as a motor. When using the brushless motor, there are many cases of realizing current control of a motor in a dq-rotating coordinate system defined by a d-axis and a q-axis. In the current control of the motor in the dq-rotating coordinate system, for example, in the case of a three-phase brushless motor, a transformation from the dq-rotating coordinate system to a UVW-fixed coordinate system defined by a U-phase, a V-phase and a W-phase is performed. For example an apparatus described in a publication of Japanese Patent No. 3480843 B2 (Patent Document 1), which corrects a three-phase voltage command value to maximally utilize a power supply voltage, performs a dq-coordinate transformation of transforming a three-phase detection current into d-axis and q-axis detection currents and a dq-coordinate inverse transformation of transforming a three-phase voltage command value into d-axis and q-axis voltage command values.

The List of Prior Art Documents

Patent Documents

Patent Document 1: Japanese Patent No.3480843 B2

Summary of the Invention

Problems to be Solved by the Invention

However, the apparatus disclosed in Patent Document 1 uses a trigonometric function and a square root which impose processing loads in calculations of the dq-coordinate transformation and the dq-coordinate inverse transformation. Therefore, when performing these calculations by a microcomputer or the like, a lot of calculation time is needed, and when coping with the calculations by such logic designs as a circuit, the cost increases, and it is difficult to flexibly deal with a design change or the like.

The present invention has been developed in view of the above-described circumstances, and an object of the present invention is to provide a control method and a control unit of an electric power steering apparatus that simplifies a calculation of a transformation from a two-phase command value (a current command value or a voltage command value) to a three-phase command value performed in the case of driving and controlling a motor, in particular a three-phase brushless motor, mounted on the electric power steering apparatus, reduces a load of the calculation amount, and enables installation to a microcomputer or the like.

Means for Solving the Problems

The present invention relates to a control method of an electric power steering apparatus that drives and controls a motor based on a current command value, and applies an assist torque to a steering mechanism of a vehicle by the motor, the above-described object of the present invention is achieved by that comprising: a transformation step of transforming a two-phase command value calculated from the current command value into a three-phase command value; wherein the transformation step separates a region for a vector consisting of the two-phase command value into six sectors, and transforms the two-phase command value into the three-phase command value in accordance with a calculation method that is predefined in each sector and is simplified; and wherein the electric power steering apparatus drives the motor in accordance with the three-phase command value.

Further, the present invention relates to a control unit of an electric power steering apparatus that drives and controls a motor based on a current command value, and applies an assist torque to a steering mechanism of a vehicle by the motor, the above-described object of the present invention is achieved by that comprising: a transforming section that transforms a two-phase command value calculated from the current command value into a three-phase command value; wherein the transforming section separates a region for a vector consisting of the two-phase command value into six sectors, and transforms the two-phase command value into the three-phase command value in accordance with a calculation method that is predefined in each sector and is simplified; and wherein the electric power steering apparatus drives the motor in accordance with the three-phase command value.

The above-described object of the present invention is more effectively achieved by that wherein the sector is generated by separating the region at equal angles around an origin; or wherein the transformation step specifies the sector where the vector lies by signs of the two-phase command value and comparison between amplitudes of the two-phase command value, and transforms the two-phase command value into the three-phase command value in accordance with the calculation method defined in the specified sector; or the two-phase command value is data in fixed coordinates of an $\alpha$ axis and a $\beta$ axis, and the three-phase command value is data to a U phase, a V phase and a W phase; or wherein the calculation method simplifies a calculation by using data obtained by dividing an absolute value of data to the $\beta$ axis in the two-phase command value by a square root of three in common.

Effects of the Invention

The control method and the control unit of the electric power steering apparatus according to the present invention can reduce a calculation which imposes a processing load, such as a trigonometric function, and improve a load of the calculation amount by performing the transformation from the two-phase command value to the three-phase command value in the case of driving and controlling a three-phase brushless motor or the like with a simple calculation method of a spatial vector modulation defined in respective sectors.

Brief Description of the Drawings

In the accompanying drawings:

FIG. 1 is a configuration diagram illustrating a general outline of an electric power steering apparatus;
FIG. 2 is a block diagram showing a configuration example of a control unit (ECU) of the electric power steering apparatus;
FIG. 3 is a diagram showing a relation between a dq-rotating coordinate system and an $\alpha\beta$-fixed coordinate system;
FIG. 4 is a diagram showing a relation between the $\alpha\beta$-fixed coordinate system and a UVW-fixed coordinate system;
FIG. 5 is a diagram for describing derivation of a conventional transformation from the $\alpha\beta$-fixed coordinate system to the UVW-fixed coordinate system;
FIG. 6 is a diagram showing a relation of signs of an $\alpha$-axis voltage command value and a $\beta$-axis voltage command value used to specify a sector;
FIG. 7 is a diagram for describing comparison between the $\alpha$-axis voltage command value and the $\beta$-axis voltage command value used to specify the sector;
FIG. 8 is a diagram for describing derivation of a transformation from the $\alpha\beta$-fixed coordinate system to the UVW-fixed coordinate system in the present invention;
FIG. 9 is a diagram for describing derivation of the transformation from the $\alpha\beta$-fixed coordinate system to the UVW-fixed coordinate system in the present invention;
FIG. 10 is a block diagram showing a configuration example (a first embodiment) of the present invention;
FIG. 11 is a flowchart showing an operating example (the first embodiment) of the present invention; and
FIG. 12 is a block diagram showing a configuration example (a second embodiment) of the present invention.

Mode for Carrying Out the Invention

In order to reduce a load of a calculation amount in a transformation from a two-phase command value to a three-phase command value performed to drive and control a motor, the present invention simplifies the calculation for the transformation. The transformation from the two-phase command value to the three-phase command value is performed by a spatial vector modulation, and this spatial vector modulation is performed with a simple calculation method of reducing a calculation which imposes a processing load, such as a trigonometric function. Since the simple calculation method is defined in each sector, it is necessary to specify the sector in the transformation, and this specification of the sector is also performed with a method which does not impose a processing load.

Hereinafter, an embodiment of the present invention will be described with reference to the accompanying drawings. It is possible to perform the above transformation from two phases to three phases in either case of targeting a current command value or targeting a voltage command value, and the present embodiment targets the voltage command value.

First, a conventional calculation method will be described for describing the present embodiment.

Generally, voltage command values (a d-axis voltage command value and a q-axis voltage command value) to a d-axis and a q-axis which constitute a rotating coordinate system, are set as a two-phase voltage command value being an assist (steering assist) command. The rotating coordinate system is a coordinate system which rotates with a rotor rotating in a motor. In that coordinate system, a two-phase current on the rotor looks as stopping, a current which looks as stopping can be treated as a direct current, so that it is easy to set a voltage command value being a target value.

In the case of using a three-phase motor as a motor, it is necessary to transform a d-axis voltage command value and a q-axis voltage command value in a two-phase rotating coordinate system into a voltage command value in a three-phase fixed coordinate system. Instead of a direct transformation, there are many cases where the transformation is performed in two steps of a transformation from the two-phase rotating coordinate system to a two-phase fixed coordinate system and a transformation from the two-phase fixed coordinate system to the three-phase fixed coordinate system.

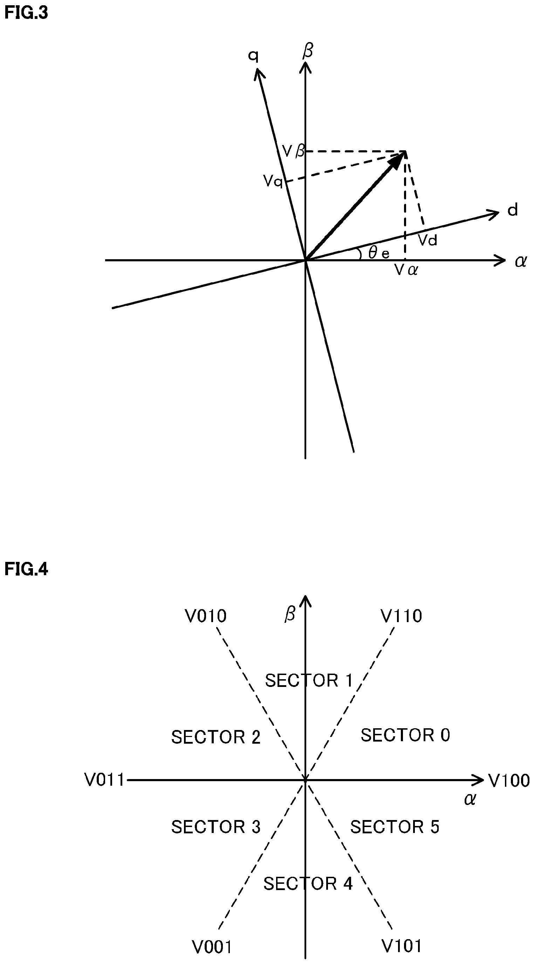

In the transformation from the two-phase rotating coordinate system to the two-phase fixed coordinate system, the d-axis voltage command value and the q-axis voltage command value are transformed into voltage command values (an $\alpha$-axis voltage command value and a $\beta$-axis voltage command value) to an $\alpha$-axis and a $\beta$-axis which constitute a rotating coordinate system. This transformation needs a rotational angle (an electrical angle) of the rotor, and the rotational angle of the rotor can be acquired from a rotational position sensor such as a resolver connected to the motor. For example, in the case that a dq-rotating coordinate system defined by the d-axis and the q-axis and an $\alpha\beta$-fixed coordinate system defined by the $\alpha$-axis and the $\beta$-axis have a relation shown in FIG. 3, an $\alpha$-axis voltage command value $V\alpha$ and a $\beta$-axis voltage command value $V\beta$ are calculated by the following expression 1 using a d-axis voltage command value $Vd$, a q-axis voltage command value $Vq$ and a rotational angle $\theta e$.

[Expression 1]

$$V\alpha = Vd \cdot \cos(\theta e) - Vq \cdot \sin(\theta e)$$

$$V\beta = Vd \cdot \sin(\theta e) + Vq \cdot \cos(\theta e)$$

In the transformation from the two-phase fixed coordinate system to the three-phase fixed coordinate system, the $\alpha$-axis voltage command value and the $\beta$-axis voltage command value are transformed into voltage command values (a U-phase voltage command value, a V-phase voltage command value and a W-phase voltage command value) to a U phase, a V phase and a W phase of the three-phase motor with a spatial vector modulation (a spatial vector transformation). Since sine wave alternating currents whose phases are shifted each other by 120 degrees $((2/3)\pi$ radian) flow to the U phase, the V phase and the W phase, first, three axes which are shifted by 120 degrees corresponding to the U phase, the V phase and the W phase, are prepared in the spatial vector modulation. Respective axes are written as V100, V010 and V001, V100 corresponds to the U phase, V010 corresponds to the V phase, and V001 corresponds to the W phase. Each axis is extended to the opposite direction with the origin centered, the extended line of V100 lying between V010 and V001 is shown as V011, the extended line of V010 lying between V001 and V100 is shown as V101, and the extended line of V001 lying between V100 and V010 is shown as V110. As a result, six quadrants (sectors) separated at 60 degree $((1/3)\pi$ radian) intervals around the origin are generated as shown in FIG. 4. With respect to the six sectors, a sector separated by V100 and V110 is defined as a sector 0, and sectors lying counterclockwise from the sector 0 are defined as a sector 1, a sector 2, a sector 3, a sector 4 and a sector 5 successively. The $\alpha$ axis of the $\alpha\beta$-fixed coordinate system is made coincident with the V100, and the $\beta$ axis is made coincident with a bisector of an angle formed by the V110 and the V010.

Thus, the U-phase voltage command value, the V-phase voltage command value and the W-phase voltage command value (hereinafter these three voltage command values are collectively referred to a "phase voltage command value") are calculated from the $\alpha$-axis voltage command value and the $\beta$-axis voltage command value by using a UVW-fixed coordinate system defined by the U phase, the V phase and the W phase. That is, when a vector (hereinafter referred to a "command value vector") consisting of the $\alpha$-axis voltage command value $V\alpha$ and the $\beta$-axis voltage command value $V\beta$ is arranged in the UVW-fixed coordinate system, an amplitude Eamp of the command value vector and an angle (hereinafter referred to an "$\alpha$ angle") Ephase formed by the command value vector and the $\alpha$ axis (= V100) are calculated by the following expression 2.

[Expression 2]

$$Eamp = \sqrt{V\alpha^2 + V\beta^2}$$

$$Ephase = \arctan\left(V\beta/V\alpha\right)$$

The arctan() is an arc tangent function. A U-phase voltage command value Vu, a V-phase voltage command value Vv and a W-phase voltage command value Vw are calculated in accordance with transformations shown in the following table 1 by using the Eamp and the Ephase depending on a sector where the command value vector lies.

[Table 1]

| SECTOR | No. BOTH END AXES | TRANSFORMATION |
|--------|-------------------|----------------|
| 0 | V110 | $Vw = \dfrac{2}{\sqrt{3}} Eamp \cdot \sin\left(Ephase\right)$ |
| | V100 | $Vu = Eamp \cdot \cos\left(Ephase\right) - \dfrac{1}{2}Vw$ |
| 1 | V010 | $Vv = \dfrac{2}{\sqrt{3}} Eamp \cdot \sin\left(Ephase - \dfrac{\pi}{3}\right)$ |
| | V110 | $Vw = Eamp \cdot \cos\left(Ephase - \dfrac{\pi}{3}\right) - \dfrac{1}{2}Vv$ |
| 2 | V011 | $Vu = \dfrac{2}{\sqrt{3}} Eamp \cdot \sin\left(Ephase - \dfrac{2}{3}\pi\right)$ |
| | V010 | $Vv = Eamp \cdot \cos\left(Ephase - \dfrac{2}{3}\pi\right) - \dfrac{1}{2}Vu$ |
| 3 | V001 | $Vw = \dfrac{2}{\sqrt{3}} Eamp \cdot \sin\left(Ephase - \pi\right)$ |
| | V011 | $Vu = Eamp \cdot \cos\left(Ephase - \pi\right) - \dfrac{1}{2}Vw$ |
| 4 | V101 | $Vv = \dfrac{2}{\sqrt{3}} Eamp \cdot \sin\left(Ephase - \dfrac{4}{3}\pi\right)$ |
| | V001 | $Vw = Eamp \cdot \cos\left(Ephase - \dfrac{4}{3}\pi\right) - \dfrac{1}{2}Vv$ |
| 5 | V100 | $Vu = \dfrac{2}{\sqrt{3}} Eamp \cdot \sin\left(Ephase - \dfrac{5}{3}\pi\right)$ |
| | V101 | $Vv = Eamp \cdot \cos\left(Ephase - \dfrac{5}{3}\pi\right) - \dfrac{1}{2}Vu$ |

In the table 1, both end axes are two axes constituting each sector. Since an addition of the U-phase voltage command value Vu, the V-phase voltage command value Vv and the W-phase voltage command value Vw becomes zero, a voltage command value of a phase where a transformation is not shown in each sector, is calculated from a relational expression of the following expression 3 by using voltage command values of other two phases.

[Expression 3]

$$Vu + Vv + Vw = 0$$

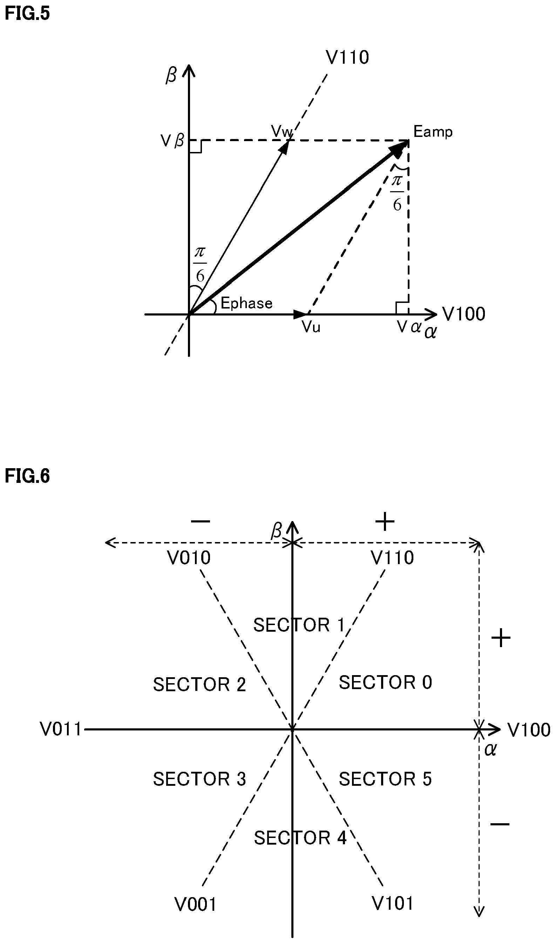

For example, when the command value vector lies in the sector 0, each transformation shown in the table 1 is derived from a relation shown in FIG. 5 (a detailed explanation is omitted).

The present embodiment simplifies a calculation of the transformation from the $\alpha\beta$-fixed coordinate system to the UVW-fixed coordinate system, that is, the transformation shown in the table 1.

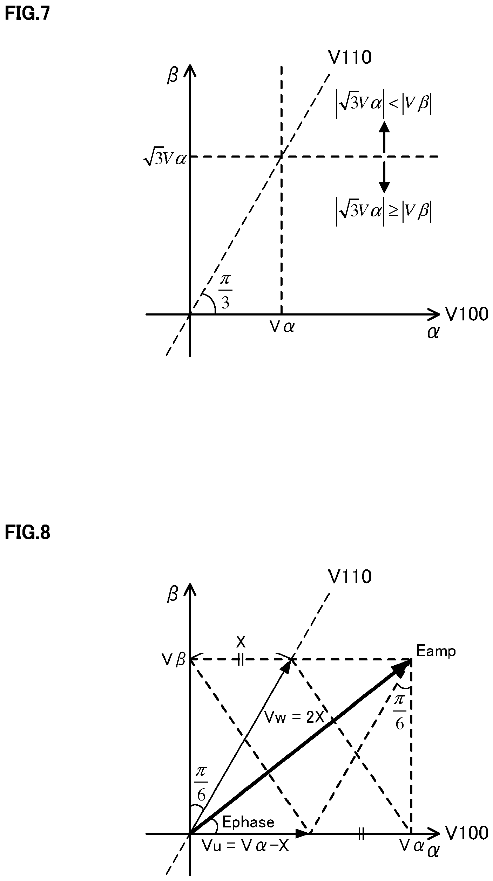

As described above, in the transformation from the $\alpha\beta$-fixed coordinate system to the UVW-fixed coordinate system, first, a sector where the command value vector lies is specified. A load of a calculation amount for this specification is also reduced. That is, though the sector where the command value vector lies can be specified from the $\alpha$ angle Ephase of the command value vector, it is necessary to use the arc tangent function which imposes a processing load as shown in the above expression 2 in order to calculate the Ephase. Therefore, the present embodiment specifies the sector where the command value vector lies by signs of the $\alpha$-axis voltage command value V$\alpha$ and the $\beta$-axis voltage command value V$\beta$ constituting the command value vector and a comparison between amplitudes of both command values. That is, as shown in FIG. 6, the quadrant where the command value vector lies is specified among four quadrants separated by the $\alpha$-axis and the $\beta$-axis from the signs of the $\alpha$-axis voltage command value V$\alpha$ and the $\beta$-axis voltage command value V$\beta$. Since each of four quadrants includes two sectors, which sector the command value vector lies in is specified by comparing an absolute value of $\sqrt{3}$ V$\alpha$ and an absolute value of V$\beta$ as shown in FIG. 7. These two conditions are organized, and it is possible to specify the sector where the command value vector lies in accordance with conditions shown in the following table 2.

[Table 2]

| COMPARISON OF AMPLITUDE | SIGN OF V$\alpha$ | SIGN OF V$\beta$ | SECTOR |
|---|---|---|---|
| $\sqrt{3}V\alpha \geq \lvert V\beta \rvert$ | POSITIVE | POSITIVE | 0 |
| $\sqrt{3}V\alpha < \lvert V\beta \rvert$ | | POSITIVE | 1 |
| $\sqrt{3}V\alpha \geq \lvert V\beta \rvert$ | NEGATIVE | POSITIVE | 2 |
| $\sqrt{3}V\alpha \geq \lvert V\beta \rvert$ | NEGATIVE | NEGATIVE | 3 |
| $\sqrt{3}V\alpha < \lvert V\beta \rvert$ | | NEGATIVE | 4 |
| $\sqrt{3}V\alpha \geq \lvert V\beta \rvert$ | POSITIVE | NEGATIVE | 5 |

For example, when the absolute value of $\sqrt{3}$ V$\alpha$ is larger than or equal to the absolute value of V$\beta$ and the signs of V$\alpha$ and V$\beta$ are positive, the sector where the command value vector lies is the sector 0. When the absolute value of $\sqrt{3}$ V$\alpha$ is smaller than the absolute value of V$\beta$ and the sign of V$\beta$ are positive (the sign of V$\alpha$ is not necessary), the sector where the command value vector lies is the sector 1.

Moreover, instead of comparison between the absolute value of $\sqrt{3}$ V$\alpha$ and the absolute value of V$\beta$, it is possible to specify the sector by comparison between the absolute value of V$\alpha$ and the absolute value of V$\beta$ / $\sqrt{3}$.

In the transformation from the $\alpha\beta$-fixed coordinate system to the UVW-fixed coordinate system, a variable X calculated by the following expression 4 is used in order to commonize calculations.

[Expression 4]

$$X = \frac{|V\beta|}{\sqrt{3}}$$

In the case of using this variable X, the W-phase voltage command value Vw in the sector 0 becomes Vw = 2 X because the β-axis voltage command value Vβ is expressed by the following expression 5.

[Expression 5]

$$V\beta = Eamp \cdot \sin(Ephase)$$

 The U-phase voltage command value Vu in the sector 0 becomes Vu = |Vα| - X as seen from a relation shown in FIG. 8. Similarly, phase voltage command values in the sector 2, the sector 3 and the sector 5 are derived.

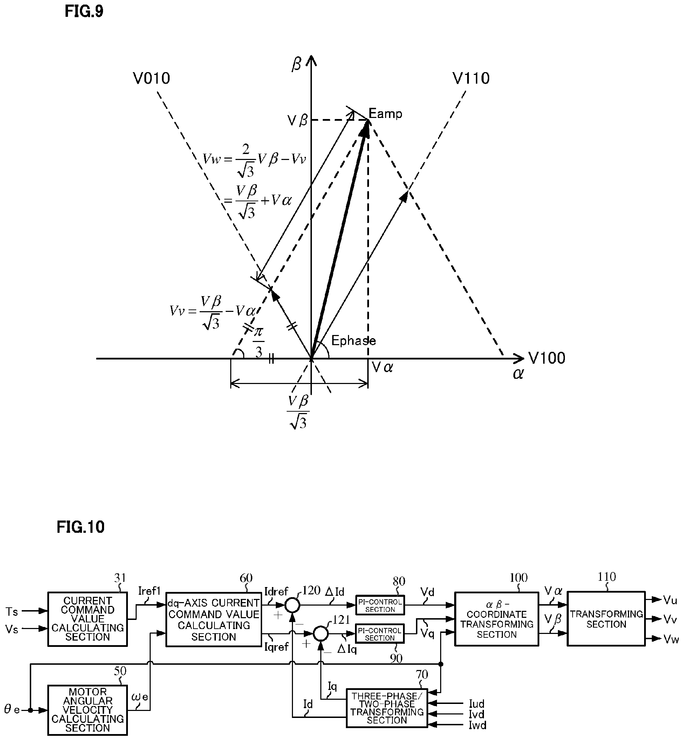

In a relation shown in FIG. 9, since the lower left triangle is an equilateral triangle, the V-phase voltage command value Vv becomes Vv = (Vβ / √3) - Vα, and as a result, the W-phase voltage command value Vw in the sector 1 becomes Vw = Vα + X. It is possible to change the V-phase voltage command value Vv in the sector 1 to Vv = 2 X - Vw. Similarly, the V-phase voltage command value and the W-phase voltage command value in the sector 4 are derived.

Consequently, the transformations shown in the table 1 are simplified by using the variable X as shown in the following table 3.

[Table 3]

| SECTOR No. | BOTH END AXES | TRANSFORMATION |
|---|---|---|
| 0 | V110 | Vw = 2X |
|   | V100 | Vu = \|Vα\| - X |
| 1 |      | Vv = 2X - Vw |
|   | V110 | Vw = Vα + X |
| 2 | V011 | Vu = \|Vα\| - X |
|   |      | Vv = 2X |
| 3 | V001 | Vw = 2X |
|   | V011 | Vu = \|Vα\| - X |
| 4 | V101 | Vv = Vα + X |
|   | V001 | Vw = 2X - Vv |
| 5 | V100 | Vu = \|Vα\| - X |
|   | V101 | Vv = 2X |

Thus, since the present embodiment performs the transformation from the α-axis voltage command value and the β-axis voltage command value being the two-phase command value to the U-phase voltage command value, the V-phase voltage command value and the W-phase voltage command value being the three-phase command value by a simple calculation using the X being a common variable as shown in the table 3, and performs also the specification of the sector by the signs of the α-axis voltage command value and the β-axis voltage command value and comparison between the amplitudes of them as shown in the table 2, the present embodiment can reduce the calculation amount.

A configuration example (a first embodiment) of the present invention is shown in FIG. 10, and is a part of a functional configuration within a control unit (ECU) 30 in a configuration shown in FIG. 1. A current command value calculating section 31 is the same as a current command value calculating section 31 in a configuration shown in FIG. 2, so that the explanation of it is omitted.

A motor angular velocity calculating section 50 calculates a motor angular velocity ωe from a rotational angle (an electrical angle) θe of the rotor acquired from a rotational position sensor (not shown) connected to the motor, and so on.

A dq-axis current command value calculating section 60 inputs a current command value Irefl outputted from the current command value calculating section 31 and the motor angular velocity $\omega$e calculated by the motor angular velocity calculating section 50, and calculates a d-axis current command value Idref and a q-axis current command value Iqref. The d-axis current command value Idref and the q-axis current command value Iqref are calculated with, for example, a method performed at a d-q axis current command value calculating section described in a publication of Japanese Patent No. 5282376 B2. At this time, when a motor angular velocity corresponding to a motor mechanical angle is necessary, it is calculated on the basis of the motor angular velocity $\omega$e corresponding to an electrical angle.

A three-phase/two-phase transforming section 70 transforms motor current detection values of respective phases detected by a motor current detector or the like, that is, a motor current detection value (hereinafter referred to a "U-phase motor current detection value) Iud at the U phase, a motor current detection value (hereinafter referred to a "V-phase motor current detection value) Ivd at the V phase, and a motor current detection value (hereinafter referred to a "W-phase motor current detection value) Iwd at the W phase into a d-axis current detection value Id and a q-axis current detection value Iq by using the rotational angle $\theta$e.

A subtracting section 120 calculates a deviation $\Delta$Id (Idref - Id) between the d-axis current command value Idref and the d-axis current detection value Id. A subtracting section 121 calculates a deviation $\Delta$Iq (Iqref - Iq) between the q-axis current command value Iqref and the q-axis current detection value Iq.

A PI-control section 80 inputs the deviation $\Delta$Id, and outputs a d-axis voltage command value Vd whose characteristic is improved. Similarly, a PI-control section 90 inputs the deviation $\Delta$Iq, and outputs a q-axis voltage command value Vq whose characteristic is improved.

An $\alpha\beta$-coordinate transforming section 100 inputs the d-axis voltage command value Vd, the q-axis voltage command value Vq and the rotational angle $\theta$e, and calculates the $\alpha$-axis voltage command value V$\alpha$ and the $\beta$-axis voltage command value V$\beta$ by using the expression 1. In the calculation, in order to reduce the calculation amount, it is possible to obtain sin($\theta$e) and cos($\theta$e) at first, and to calculate the $\alpha$-axis voltage command value V$\alpha$ and the $\beta$-axis voltage command value V$\beta$ by sharing them.

A transforming section 110 inputs the $\alpha$-axis voltage command value V$\alpha$ and the $\beta$-axis voltage command value V$\beta$ which are calculated by the $\alpha\beta$-coordinate transforming section 100, and transforms them into the U-phase voltage command value Vu, the V-phase voltage command value Vv and the W-phase voltage command value Vw. The transforming section 110 compares |$\sqrt{3}$ V$\alpha$| calculated from the $\alpha$-axis voltage command value V$\alpha$ and an absolute value |V$\beta$| of the $\beta$-axis voltage command value V$\beta$ at first, and specifies the sector where the command value vector consisting of the $\alpha$-axis voltage command value V$\alpha$ and the $\beta$-axis voltage command value V$\beta$ lies according to the table 2 based on the signs of the $\alpha$-axis voltage command value V$\alpha$ and the $\beta$-axis voltage command value V$\beta$. The transforming section 110 calculates the variable X from the $\beta$-axis voltage command value V$\beta$ according to the expression 4, and calculates the phase voltage command values by using the transformations assigned to the specified sector according to the table 3. The voltage command value of the phase where the transformation is not shown in the table 3, is calculated on the basis of the expression 3 by using voltage command values of other two phases. Moreover, the table 2 for specifying the sector may be retained as a table by the transforming section 110, or may be integrated into a program or the like as logical processing for conditional judgment.

The calculated phase voltage command values (the U-phase voltage command value Vu, the V-phase voltage command value Vv and the W-phase voltage command value Vw) correspond to a voltage control command value Vref which a PI-control section 35 outputs in a configuration shown in FIG. 2, and are used to PWM-drive the motor.

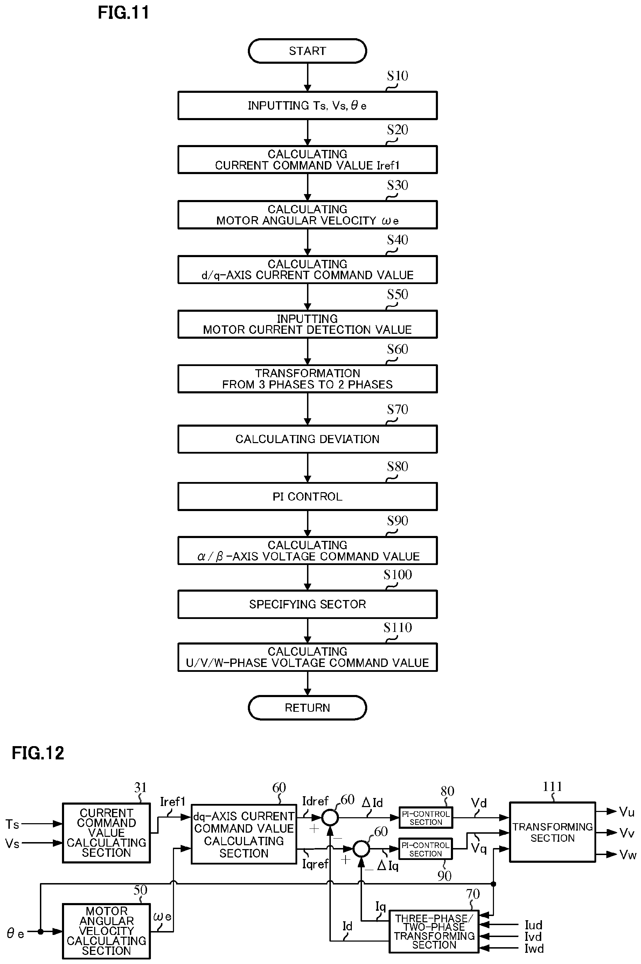

In such a configuration, an operating example of it will be described with reference to a flowchart shown in FIG. 11.

As the operation starts, a steering torque Ts detected by a torque sensor or the like and a vehicle speed Vs detected by a vehicle speed sensor or the like are inputted into the current command value calculating section 31, and the rotational angle $\theta$e detected by the rotational position sensor or the like is inputted into the motor angular velocity calculating section 50 (Step S10). The rotational angle $\theta$e is inputted also into the three-phase/two-phase transforming section 70 and the $\alpha\beta$-coordinate transforming section 100.

The current command value calculating section 31 calculates the current command value Irefl on the basis of the steering torque Ts and the vehicle speed Vs by using an assist map or the like (Step S20). The motor angular velocity calculating section 50 calculates the motor angular velocity $\omega$e from the rotational angle $\theta$e (Step S30). Moreover, the order of the calculation of the current command value Irefl and the calculation of the motor angular velocity $\omega$e may be reversed.

The current command value Iref1 and the motor angular velocity $\omega$e are inputted into the dq-axis current command value calculating section 60. The dq-axis current command value calculating section 60 calculates the d-axis current command value Idref and the q-axis current command value Iqref on the basis of the current command value Iref1 and the motor angular velocity $\omega$e (Step S40).

The three-phase/two-phase transforming section 70 inputs the U-phase motor current detection value Iud, the V-phase motor current detection value Ivd and the W-phase motor current detection value Iwd detected by the motor current detector or the like with the rotational angle θe (Step S50), and transforms them into the d-axis current detection value Id and the q-axis current detection value Iq in accordance with the transformation from three phases to two phases (Step S60).

The subtracting section 120 addition-inputs the d-axis current command value Idref, subtraction-inputs the d-axis current detection value Id, and calculates the deviation ΔId. The subtracting section 121 addition-inputs the q-axis current command value Iqref, subtraction-inputs the q-axis current detection value Iq, and calculates the deviation ΔIq (Step S70).

The deviations ΔId and ΔIq are inputted into the PI-control sections 80 and 90 respectively, and the d-axis voltage command value Vd and the q-axis voltage command value Vq are generated by the PI control respectively (Step S80).

The d-axis voltage command value Vd and the q-axis voltage command value Vq are inputted into the αβ-coordinate transforming section 100 with the rotational angle θe. The αβ-coordinate transforming section 100 calculates the α-axis voltage command value Vα and the β-axis voltage command value Vβ from the d-axis voltage command value Vd, the q-axis voltage command value Vq and the rotational angle θe by using the expression 1, and outputs them to the transforming section 110 (Step S90).

The transforming section 110 calculates |√3 Vα| and |Vβ| from the α-axis voltage command value Vα and the β-axis voltage command value Vβ, and specifies the sector where the command value vector lies according to the table 2 by comparison between the calculated both values and the signs of the α-axis voltage command value Vα and the β-axis voltage command value Vβ (Step S100). After that, the transforming section 110 calculates the variable X from the β-axis voltage command value Vβ according to the expression 4, calculates the phase voltage command values by using the information of the specified sector and the variable X according to the table 3, calculates the phase voltage command value not calculated by the transformations shown in the table 3 on the basis of the expression 3, and outputs the U-phase voltage command value Vu, the V-phase voltage command value Vv and the W-phase voltage command value Vw which are calculated (Step S110). For example, in the case that the sector where the command value vector lies is the sector 0, the W-phase voltage command value Vw and the U-phase voltage command value Vu are calculated as Vw = 2 X and Vu = |Vα| - X respectively, and the V-phase voltage command value Vv is calculated as Vv = -Vu - Vw.

The U-phase voltage command value Vu, the V-phase voltage command value Vv and the W-phase voltage command value Vw are used to PWM-drive the motor.

Moreover, the simplified transformation which is used for transformation from the αβ-fixed coordinate system to the UVW-fixed coordinate system, is not limited to the expression described in the table 3, and, for example, the transformation to the V-phase voltage command value Vv in the sector 1 may be "Vv = X - Vα".

Next, another configuration example of the present invention will be described.

FIG. 12 shows another configuration example (a second embodiment) of the present invention. In the second embodiment, the αβ-coordinate transforming section 100 and the transforming section 110 in the first embodiment shown in FIG. 10 are integrated into a transforming section 111. Therefore, the transforming section 111 inputs the d-axis voltage command value Vd, the q-axis voltage command value Vq and the rotational angle θe, and outputs the U-phase voltage command value Vu, the V-phase voltage command value Vv and the W-phase voltage command value Vw. Others of the configuration are the same as the first embodiment.

After performing the transformation from the dq-rotating coordinate system to the αβ-fixed coordinate system performed by the αβ-coordinate transforming section 100, the transforming section 111 may perform the transformation from the αβ-fixed coordinate system to the UVW-fixed coordinate system performed by the transforming section 110. It is also possible to integrate both transformations, for example, to calculate the variable X by the following expression 6.

[Expression 6]

$$X = \frac{\left| Vd \cdot \sin(\theta e) + Vq \cdot \cos(\theta e) \right|}{\sqrt{3}}$$

Integration of both transformations enables increase in variation of simplification of the calculation.

Explanation of Reference Numerals

| | |
|---|---|
| 1 | steering wheel |
| 2 | column shaft (steering shaft, handle shaft) |

| | |
|---|---|
| 10 | torque sensor |
| 12 | vehicle speed sensor |
| 14 | steering angle sensor |
| 20 | motor |
| 30 | control unit (ECU) |
| 31 | current command value calculating section |
| 60 | dq-axis current command value calculating section |
| 70 | three-phase/two-phase transforming section |
| 80, 90 | PI-control section |
| 100 | $\alpha\beta$-coordinate transforming section |
| 110, 111 | transforming section |

**Claims**

1. A control method of an electric power steering apparatus that drives and controls a motor based on a current command value, and applies an assist torque to a steering mechanism of a vehicle by said motor, comprising:

   a transformation step of transforming a two-phase command value calculated from said current command value into a three-phase command value;
   wherein said transformation step separates a region for a vector consisting of said two-phase command value into six sectors, and transforms said two-phase command value into said three-phase command value based on a calculation method that is predefined in each sector and is simplified and a total of said three-phase command value becoming zero; and
   wherein said electric power steering apparatus drives said motor in accordance with said three-phase command value.

2. The control method of the electric power steering apparatus according to claim 1,
   wherein said sector is generated by separating said region at equal angles around an origin.

3. The control method of the electric power steering apparatus according to claim 2,
   wherein said transformation step specifies said sector where said vector lies by signs of said two-phase command value and comparison between amplitudes of said two-phase command value, and transforms said two-phase command value into said three-phase command value in accordance with said calculation method defined in said specified sector.

4. The control method of the electric power steering apparatus according to claim 2,
   wherein said two-phase command value is data in fixed coordinates of an $\alpha$ axis and a $\beta$ axis, and said three-phase command value is data to a U phase, a V phase and a W phase.

5. The control method of the electric power steering apparatus according to claim 3,
   wherein said two-phase command value is data in fixed coordinates of an $\alpha$ axis and a $\beta$ axis, and said three-phase command value is data to a U phase, a V phase and a W phase.

6. The control method of the electric power steering apparatus according to claim 4,
   wherein said calculation method performs a calculation without a trigonometric function by using data obtained by dividing an absolute value of data to said $\beta$ axis in said two-phase command value by a square root of three in common.

7. The control method of the electric power steering apparatus according to claim 5,
   wherein said calculation method performs a calculation without a trigonometric function by using data obtained by dividing an absolute value of data to said $\beta$ axis in said two-phase command value by a square root of three in common.

8. A control unit of an electric power steering apparatus that drives and controls a motor based on a current command value, and applies an assist torque to a steering mechanism of a vehicle by said motor, comprising:

   a transforming section (110) that transforms a two-phase command value calculated from said current command value into a three-phase command value;
   wherein said transforming section (110) separates a region for a vector consisting of said two-phase command value into six sectors, and transforms said two-phase command value into said three-phase command value based on a calculation method that is predefined in each sector and is simplified and a total of said three-phase command value becoming zero; and

wherein said electric power steering apparatus drives said motor in accordance with said three-phase command value.

9. The control unit of the electric power steering apparatus according to claim 8,
   wherein said sector is generated by separating said region at equal angles around an origin.

10. The control unit of the electric power steering apparatus according to claim 9,
    wherein said transforming section (110) specifies said sector where said vector lies by signs of said two-phase command value and comparison between amplitudes of said two-phase command value, and transforms said two-phase command value into said three-phase command value in accordance with said calculation method defined in said specified sector.

11. The control unit of the electric power steering apparatus according to claim 9,
    wherein said two-phase command value is data in fixed coordinates of an $\alpha$ axis and a $\beta$ axis, and said three-phase command value is data to a U phase, a V phase and a W phase.

12. The control unit of the electric power steering apparatus according to claim 10,
    wherein said two-phase command value is data in fixed coordinates of an $\alpha$ axis and a $\beta$ axis, and said three-phase command value is data to a U phase, a V phase and a W phase.

13. The control unit of the electric power steering apparatus according to claim 11,
    wherein said calculation method performs a calculation without a trigonometric function by using data obtained by dividing an absolute value of data to said $\beta$ axis in said two-phase command value by a square root of three in common.

14. The control unit of the electric power steering apparatus according to claim 12,
    wherein said calculation method performs a calculation without a trigonometric function by using data obtained by dividing an absolute value of data to said $\beta$ axis in said two-phase command value by a square root of three in common.

**Patentansprüche**

1. Steuerverfahren für eine elektrische Servolenkungsvorrichtung, die einen Motor basierend auf einem Strombefehlswert antreibt und steuert, und ein Hilfsdrehmoment auf einen Lenkmechanismus eines Fahrzeugs durch den Motor anlegt, aufweisend:

   einen Umwandlungsschritt der Umwandlung eines Zweiphasen-Befehlswerts, der aus dem Strombefehlswert berechnet wurde, in einen Dreiphasen-Befehlswert;
   wobei der Umwandlungsschritt ein Gebiet für einen Vektor, der aus dem Zweiphasen-Befehlswert besteht, in sechs Sektoren aufteilt, und den Zweiphasen-Befehlswert in den Dreiphasen-Befehlswert basierend auf einem Berechnungsverfahren umwandelt, das in einem jedem Sektor vordefiniert ist und vereinfacht ist und ein Gesamtbetrag des Dreiphasen-Befehlswerts 0 wird; und
   wobei die elektrische Servolenkungsvorrichtung den Motor gemäß dem Dreiphasen-Befehlswert antreibt.

2. Steuerverfahren der elektrischen Servolenkungsvorrichtung nach Anspruch 1, wobei der Sektor erzeugt wird, in dem das Gebiet um einen Ursprung in gleiche Winkel aufgeteilt wird.

3. Steuerverfahren der elektrischen Servolenkungsvorrichtung nach Anspruch 2, wobei der Umwandlungsschritt den Sektor, in dem der Vektor liegt, durch die Vorzeichen des Zweiphasen-Befehlswerts und einen Vergleich zwischen den Amplituden des Zweiphasen-Befehlswerts angibt, und den Zweiphasen-Befehlswert in den Dreiphasen-Befehlswert gemäß dem in dem angegebenen Sektor definierten Berechnungsverfahren umwandelt.

4. Steuerverfahren der elektrischen Servolenkungsvorrichtung nach Anspruch 2, wobei der Zweiphasen-Befehlswert Daten in feststehenden Koordinaten einer $\alpha$-Achse und einer $\beta$-Achse sind, und der Dreiphasen-Befehlswert Daten für eine U-Phase, eine V-Phase und eine W-Phase sind.

**5.** Steuerverfahren der elektrischen Servolenkungsvorrichtung nach Anspruch 3, wobei der Zweiphasen-Befehlswert Daten in feststehenden Koordinaten einer $\alpha$-Achse und einer $\beta$-Achse sind, und der Dreiphasen-Befehlswert Daten für eine U-Phase, eine V-Phase und eine W-Phase sind.

**6.** Steuerverfahren der elektrischen Servolenkungsvorrichtung nach Anspruch 4, wobei das Berechnungsverfahren eine Berechnung ohne eine trigonometrische Funktion durchführt, indem Daten verwendet werden, die durch Dividieren eines Absolutwerts der Daten für die $\beta$-Achse im Zweiphasen-Befehlswert durch eine gemeinsame Quadratwurzel von 3 erhalten werden.

**7.** Steuerverfahren der elektrischen Servolenkungsvorrichtung nach Anspruch 5, wobei das Berechnungsverfahren eine Berechnung ohne eine trigonometrische Funktion durchführt, indem Daten verwendet werden, die durch Dividieren eines Absolutwerts der Daten für die $\beta$-Achse im Zweiphasen-Befehlswert durch eine gemeinsame Quadratwurzel von 3 erhalten werden.

**8.** Steuereinheit einer elektrischen Servolenkungsvorrichtung, die einen Motor basierend auf einem Strombefehlswert antreibt und steuert, und ein Hilfsdrehmoment auf einen Lenkmechanismus eines Fahrzeugs durch den Motor anlegt, aufweisend:

einen Umwandlungsabschnitt (110), der einen Zweiphasen-Befehlswert, der aus dem Strombefehlswert berechnet wurde, in einen Dreiphasen-Befehlswert umwandelt;
wobei der Umwandlungsabschnitt (110) ein Gebiet für einen Vektor, der aus dem Zweiphasen-Befehlswert besteht, in sechs Sektoren aufteilt, und
den Zweiphasen-Befehlswert in den Dreiphasen-Befehlswert basierend auf einem Berechnungsverfahren umwandelt, das in jedem Sektor vordefiniert ist und vereinfacht ist und ein Gesamtbetrag des Dreiphasen-Befehlswerts 0 wird; und
wobei die elektrische Servolenkungsvorrichtung den Motor gemäß dem Dreiphasen-Befehlswert antreibt.

**9.** Steuereinheit der elektrischen Servolenkungsvorrichtung nach Anspruch 8, wobei der Sektor erzeugt wird, in dem das Gebiet um einen Ursprung in gleiche Winkel aufgeteilt wird.

**10.** Steuereinheit der elektrischen Servolenkungsvorrichtung nach Anspruch 9, wobei der Umwandlungsabschnitt (110) den Sektor, in dem der Vektor liegt, durch die Vorzeichen des Zweiphasen-Befehlswerts und einen Vergleich zwischen den Amplituden des Zweiphasen-Befehlswerts angibt, und den Zweiphasen-Befehlswert in den Dreiphasen-Befehlswert gemäß dem im angegebenen Sektor definierten Berechnungsverfahren umwandelt.

**11.** Steuereinheit der elektrischen Servolenkungsvorrichtung nach Anspruch 9, wobei der Zweiphasen-Befehlswert Daten in feststehenden Koordinaten einer $\alpha$-Achse und einer $\beta$-Achse sind, und der Dreiphasen-Befehlswert Daten für eine U-Phase, eine V-Phase und eine W-Phase sind.

**12.** Steuereinheit der elektrischen Servolenkungsvorrichtung nach Anspruch 10, wobei der Zweiphasen-Befehlswert Daten in feststehenden Koordinaten einer $\alpha$-Achse und einer $\beta$-Achse sind, und der Dreiphasen-Befehlswert Daten für eine U-Phase, eine V-Phase und eine W-Phase sind.

**13.** Steuereinheit der elektrischen Servolenkungsvorrichtung nach Anspruch 11, wobei das Berechnungsverfahren eine Berechnung ohne eine trigonometrische Funktion durchführt, indem Daten verwendet werden, die durch Dividieren eines Absolutwerts der Daten für die $\beta$-Achse im Zweiphasen-Befehlswert durch eine gemeinsame Quadratwurzel von 3 erhalten werden.

**14.** Steuereinheit der elektrischen Servolenkungsvorrichtung nach Anspruch 12, wobei das Berechnungsverfahren eine Berechnung ohne eine trigonometrische Funktion durchführt, indem Daten verwendet werden, die durch Dividieren eines Absolutwerts der Daten für die $\beta$-Achse im Zweiphasen-Befehlswert durch eine gemeinsame Quadratwurzel von 3 erhalten werden.

**Revendications**

**1.** Procédé de commande d'un dispositif de direction assistée électrique qui entraîne et commande un moteur sur la base d'une valeur de consigne de courant, et applique un couple d'assistance sur un mécanisme de direction d'un véhicule avec ledit moteur, comprenant :

une étape de transformation destinée à transformer une valeur de consigne biphasée calculée à partir de ladite valeur de consigne de courant en une valeur de consigne triphasée ;
dans lequel ladite étape de transformation sépare une zone pour un vecteur consistant en ladite valeur de consigne biphasée en six secteurs, et transforme ladite valeur de consigne biphasée en ladite valeur de consigne triphasée sur la base d'un procédé de calcul qui est prédéfini sur chaque secteur et est simplifié et du fait que le total de ladite valeur de consigne triphasée devient nulle ; et
dans lequel ledit dispositif de direction assistée électrique entraîne ledit moteur en fonction de ladite valeur de consigne triphasée.

2. Procédé de commande du dispositif de direction assistée électrique selon la revendication 1,
dans lequel ledit secteur est produit en divisant ladite zone à angles égaux par rapport à une origine.

3. Procédé de commande du dispositif de direction assistée électrique selon la revendication 2,
dans lequel ladite étape de transformation spécifie ledit secteur dans lequel se trouve ledit vecteur par des signes de ladite valeur de consigne biphasée et comparaison entre des amplitudes de ladite valeur de consigne biphasée, et transforme ladite valeur de consigne biphasée en ladite valeur de consigne triphasée en fonction dudit procédé de calcul défini dans ledit secteur spécifié.

4. Procédé de commande du dispositif de direction assistée électrique selon la revendication 2,
dans lequel ladite valeur de consigne biphasée est une donnée suivant des coordonnées fixes d'un axe $\alpha$ et d'un axe $\beta$, et ladite valeur de consigne triphasée est une donnée par rapport à une phase U, une phase V et une phase W.

5. Procédé de commande du dispositif de direction assistée électrique selon la revendication 3,
dans lequel ladite valeur de consigne biphasée est une donnée suivant des coordonnées fixes d'un axe $\alpha$ et d'un axe $\beta$, et ladite valeur de consigne triphasée est une donnée par rapport à une phase U, une phase V et une phase W.
dans laquelle ladite valeur de consigne biphasée est une donnée suivant des coordonnées fixes d'un axe $\alpha$ et d'un axe $\beta$, et ladite valeur de consigne triphasée est une donnée par rapport à une phase U, une phase V et une phase W.

6. Procédé de commande du dispositif de direction assistée électrique selon la revendication 4,
dans lequel ledit procédé de calcul réalise un calcul sans fonction trigonométrique en utilisant les données obtenues en divisant une valeur absolue de données sur ledit axe $\beta$ de ladite valeur de consigne biphasée par une racine carrée de trois commune.

7. Procédé de commande du dispositif de direction assistée électrique selon la revendication 5,
dans lequel ledit procédé de calcul réalise un calcul sans fonction trigonométrique en utilisant les données obtenues en divisant une valeur absolue de données sur ledit axe $\beta$ de ladite valeur de consigne biphasée par une racine carrée de trois commune.

8. Unité de commande d'un dispositif de direction assistée électrique qui entraîne et commande un moteur sur la base d'une valeur de consigne de courant, et applique un couple d'assistance sur un mécanisme de direction d'un véhicule par ledit moteur, comprenant :

une section de transformation (110) qui transforme une valeur de consigne biphasée calculée à partir de ladite valeur de consigne de courant en une valeur de consigne triphasée ;
dans laquelle ladite section de transformation (110) sépare une zone pour un vecteur consistant en ladite valeur de consigne biphasée en six secteurs, et transforme ladite valeur de consigne biphasée en ladite valeur de consigne triphasée sur la base d'un procédé de calcul qui est prédéfini sur chaque secteur et est simplifié et du fait que le total de ladite valeur de consigne triphasée devient nulle ; et
dans laquelle ledit dispositif de direction assistée électrique entraîne ledit moteur en fonction de ladite valeur de consigne triphasée.

9. Unité de commande du dispositif de direction assistée électrique selon la revendication 8,
dans laquelle ledit secteur est produit en divisant ladite zone à angles égaux par rapport à une origine.

10. Unité de commande du dispositif de direction assistée électrique selon la revendication 9,
dans laquelle ladite section de transformation (110) spécifie ledit secteur dans lequel se trouve ledit vecteur par des signes de ladite valeur de consigne biphasée et comparaison entre des amplitudes de ladite valeur de consigne biphasée, et transforme ladite valeur de consigne biphasée en ladite valeur de consigne triphasée en fonction dudit procédé de calcul défini dans ledit secteur spécifié.

11. Unité de commande du dispositif de direction assistée électrique selon la revendication 9, dans laquelle ladite valeur de consigne biphasée est une donnée suivant des coordonnées fixes d'un axe $\alpha$ et d'un axe $\beta$, et ladite valeur de consigne triphasée est une donnée par rapport à une phase U, une phase V et une phase W.

12. Unité de commande du dispositif de direction assistée électrique selon la revendication 10, dans laquelle ladite valeur de consigne biphasée est une donnée suivant des coordonnées fixes d'un axe $\alpha$ et d'un axe $\beta$, et ladite valeur de consigne triphasée est une donnée par rapport à une phase U, une phase V et une phase W.

13. Unité de commande du dispositif de direction assistée électrique selon la revendication 11, dans laquelle ledit procédé de calcul réalise un calcul sans fonction trigonométrique en utilisant les données obtenues en divisant une valeur absolue de données sur ledit axe $\beta$ de ladite valeur de consigne biphasée par une racine carrée de trois commune.

14. Unité de commande du dispositif de direction assistée électrique selon la revendication 12, dans laquelle ledit procédé de calcul réalise un calcul sans fonction trigonométrique en utilisant les données obtenues en divisant une valeur absolue de données sur ledit axe $\beta$ de ladite valeur de consigne biphasée par une racine carrée de trois commune.

**FIG.1**

**PRIOR ART**

## FIG.2

STEERING TORQUE Ts ⟶ CURRENT COMMAND VALUE CALCULATING SECTION (31)

VEHICLE SPEED Vs ⟶

Iref1 → 32A → Iref2 → CURRENT LIMITING SECTION (33) → Irefm → 32B → I → PI-CONTROL SECTION (35) → Vref → PWM-CONTROL SECTION (36) → INVERTER (37) → 38 → M (20)

CM

34
34-5 → 34-1 CONVERGENCE
34-4 → 34-2 INERTIA
34-3 SAT

Im

PRIOR ART

EP 3 388 310 B1

**FIG.3**

**FIG.4**

**FIG.5**

**FIG.6**

**FIG.7**

**FIG.8**

**FIG.9**

**FIG.10**

FIG.11

```
                    START

                      │  S10
                      ▼
        INPUTTING Ts, Vs, θe

                      │  S20
                      ▼
              CALCULATING
        CURRENT COMMAND VALUE Iref1

                      │  S30
                      ▼
              CALCULATING
        MOTOR ANGULAR VELOCITY ωe

                      │  S40
                      ▼
              CALCULATING
        d/q-AXIS CURRENT COMMAND VALUE

                      │  S50
                      ▼
              INPUTTING
        MOTOR CURRENT DETECTION VALUE

                      │  S60
                      ▼
            TRANSFORMATION
        FROM 3 PHASES TO 2 PHASES

                      │  S70
                      ▼
        CALCULATING DEVIATION

                      │  S80
                      ▼
              PI CONTROL

                      │  S90
                      ▼
              CALCULATING
        α/β-AXIS VOLTAGE COMMAND VALUE

                      │  S100
                      ▼
        SPECIFYING SECTOR

                      │  S110
                      ▼
              CALCULATING
        U/V/W-PHASE VOLTAGE COMMAND VALUE

                      │
                      ▼
                    RETURN
```

FIG.12

**EP 3 388 310 B1**

**REFERENCES CITED IN THE DESCRIPTION**

**Patent documents cited in the description**

- JP 2001359282 A
- JP 3480843 B
- JP 5282376 B